# EUROPÄISCHE PATENTSCHRIFT

(11) **EP 3 403 018 B1**
(45) Veröffentlichungstag und Bekanntmachung des Hinweises auf die Patenterteilung: **29.07.2020**
(21) Anmeldenummer: 16823019.1
(22) Anmeldetag: 30.12.2016
(51) Int. Cl.: F16P 3/14

(54) **SICHERHEITSEINRICHTUNG UND VERFAHREN ZUM UEBERWACHEN EINER MASCHINE**
SAFETY DEVICE AND METHOD FOR MONITORING A MACHINE
DISPOSITIF DE SÉCURITÉ ET PROCÉDÉ DE SURVEILLANCE D'UNE MACHINE

(30) Priorität: 12.01.2016 DE 102016100445
(43) Veröffentlichungstag der Anmeldung: 21.11.2018
(73) Patentinhaber: Pilz GmbH & Co. KG, 73760 Ostfildern (DE)
(72) Erfinder: HUFNAGEL, Mark, 73760 Ostfildern (DE); LEIBFARTH, Roland, 73760 Ostfildern (DE)
(74) Vertreter: Witte, Weller & Partner Patentanwälte mbB
(86) Internationale Anmeldenummer: PCT/EP2016/082933
(87) Internationale Veröffentlichungsnummer: WO 2017/121628

(56) Entgegenhaltungen:
- WO-A1-2013/156575
- DE-A1- 10 327 388
- DE-A1-102010 011 786
- US-A1- 2010 220 184

## Beschreibung

Die vorliegende Erfindung ein Verfahren zum Überwachen einer Maschine, wobei ein erstes Maschinenteil eine Arbeitsbewegung gegen ein zweites Maschinenteil ausführt, um ein Werkstück zu bearbeiten, und wobei das erste Maschinenteil eine in Bewegungsrichtung vorlaufende Kante aufweist, die eine Bewegungsebene definiert, mit den Schritten: Erfassen einer Mehrzahl von Bildern mit einer Vielzahl von Bildpunkten, wobei die Bilder jeweils ortsaufgelöste Abbilder der Kante, wenigstens eines Teils des Werkstücks und eines Schutzbereichs zwischen der Kante und dem zweiten Maschinenteil aufweisen, Erfassen einer Geschwindigkeit der Arbeitsbewegung des ersten Maschinenteils relativ zu dem Werkstück, Vergleichen der erfassten Geschwindigkeit mit einer Referenzgeschwindigkeit der Arbeitsbewegung, und Stoppen) der Arbeitsbewegung, sofern die erfasste Geschwindigkeit von der Referenzgeschwindigkeit abweicht.

Die vorliegende Erfindung betrifft ferner eine Sicherheitseinrichtung für eine Maschine, wobei ein erstes Maschinenteil eine Arbeitsbewegung gegen ein zweites Maschinenteil ausführt, um ein Werkstück zu bearbeiten, wobei das erste Maschinenteil eine in Bewegungsrichtung vorlaufende Kante aufweist, die eine Bewegungsebene definiert, mit einem Bildsensor, der eine Vielzahl von Bildpunkten aufweist, um eine Mehrzahl von ortsausgelösten Abbildern der Kante, wenigstens eines Teils des Werkstücks und eines Schutzbereichs zwischen der Kante und dem zweiten Maschinenteil aufzunehmen, mit einer Bildverarbeitungseinheit, die mit dem Bildsensor gekoppelt ist, und mit einer Steuereinheit, die mit der Bildverarbeitungseinheit gekoppelt ist und dazu ausgebildet ist die eine erfasste Geschwindigkeit der Arbeitsbewegung des ersten Maschinenteils relativ zu dem Werkstück mit einer Referenzgeschwindigkeit der Arbeitsbewegung zu vergleichen und die Arbeitsbewegung zu stoppen, sofern die erfasste Geschwindigkeit von der Referenzgeschwindigkeit abweicht.

Ein derartiges Verfahren und eine derartige Sicherheitseinrichtung sind aus der DE 10 2010 011 786 A1 bekannt.

Die Erfindung betrifft insbesondere ein Verfahren zum Überwachen einer Biegepresse, Abkantpresse, Stanzmaschine oder Schneidmaschine, bei der zwei Maschinenteile aufeinander zubewegt werden. Sie ist hierauf jedoch nicht beschränkt und kann gleichermaßen bei anderen Maschinen verwendet werden, bei denen eine mitlaufende berührungslos wirkende Schutzeinrichtung zur Vermeidung von Unfällen eingesetzt werden kann. Die Erfindung betrifft entsprechend insbesondere eine Sicherheitseinrichtung für eine Biegepresse, Abkantpresse, Stanzmaschine oder Schneidmaschine.

Ein bekanntes Verfahren zur Bearbeitung von Werkstücken ist das Biegen oder Abkanten, wobei die Bearbeitung des Werkstücks im Wesentlichen dadurch erfolgt, dass ein Werkzeug gegen eine Matrize gepresst wird. Der Zwischenraum zwischen dem Werkzeug und der Matrize wird während der Abwärtsfahrt des Werkzeugs üblicherweise durch ein kamerabasiertes Schutzsystem überwacht, um zu verhindern, dass Körperteile des Bedienpersonals in den Öffnungsspalt zwischen dem Werkzeug und der Matrize gelangen.

Bei derartigen kamerabasierten Schutzsystemen wird üblicherweise ein Schutzfeld zwischen dem Werkzeug und der Matrize überwacht, das während der Abwärtsfahrt in der vertikalen Richtung reduziert wird, um eine unbeabsichtigte Sicherheitsabschaltung zu vermeiden. Während der schrittweise erfolgenden Verkleinerung bzw. Deaktivierung des Schutzfeldes muss jedoch entsprechend ein Nachlaufweg des Werkzeugs abgesichert werden, um die notwendige Sicherheit des Bedienpersonals zu gewährleisten. Daher wird üblicherweise die Geschwindigkeit des Werkzeugs im Bereich des Werkstücks abgebremst, um einen entsprechenden Nachlaufweg zu reduzieren und die Sicherheit des Bedienpersonals zu gewährleisten. Da die reduzierte Geschwindigkeit während der Abwärtsfahrt des Werkzeugs jedoch die allgemeine Produktivität der Maschine reduziert, sollte der entsprechende Bremsvorgang daher möglichst spät eingeleitet werden.

Zur Absicherung der reduzierten Geschwindigkeit des Werkzeugs wird üblicherweise die Position des Werkzeugs von Inkrementalgebern zyklisch eingelesen und in einem separaten Prozessor verarbeitet. In einem folgenden Verarbeitungszyklus werden dann die so ermittelten Positions- und Prozessdaten an ein Steuerungsmodul ausgegeben, dass bei entsprechenden Abweichungen die Bewegung des Werkzeugs abschaltet.

Nachteilig bei den so aufgebauten modularen Sicherheitseinrichtungen ist es, dass aus den zyklischen Erfassungs-, Verarbeitungs- und Ausgabevorgängen eine verhältnismäßig hohe Reaktionszeit resultiert und daher entsprechend hohe Anforderungen an die Leistungsfähigkeit der einzelnen Module gestellt werden. Ferner wird die Produktivität der Maschine entsprechend durch die gesamte Reaktionszeit der modularen Sicherheitseinrichtungen bestimmt und begrenzt. Schließlich sind derartige modulare Sicherheitseinrichtungen mit entsprechend leistungsfähigen Inkrementalgebern technisch aufwendig und kostenintensiv, so dass der Aufwand für die Geschwindigkeitsüberwachung des Werkzeugs während der Arbeitsbewegung entsprechend erhöht ist.

Es ist daher die Aufgabe der vorliegenden Erfindung ein Verfahren zum Überwachen einer Maschine sowie eine Sicherheitseinrichtung für eine Maschine bereitzustellen, bei der eine Bewegung eines Maschinenteils mit einer kurzen Reaktionszeit und mit technisch geringem Aufwand überwacht werden kann.

Diese Aufgabe wird bei dem eingangs genannten Verfahren dadurch gelöst, dass die Geschwindigkeit der Arbeitsbewegung des ersten Maschinenteils relativ zu dem Werkstück auf der Grundlage der erfassten Mehrzahl von Bildern erfasst wird, wobei die Geschwindigkeit der Arbeitsbewegung in Abhängigkeit einer Position der Kante des ersten Maschinenteils als Geschwindigkeitsprofil auf der Grundlage der erfassten Bilder bestimmt wird, und wobei das Geschwindigkeitsprofil mit einem Referenzgeschwindigkeitsprofil verglichen wird.

Diese Aufgabe wird ferner bei der eingangs genannten Sicherheitseinrichtung für eine Maschine dadurch gelöst, dass die Bildverarbeitungseinheit eingerichtet ist, die Geschwindigkeit der Arbeitsbewegung des ersten Maschinenteils relativ zu dem Werkstück auf der Grundlage der erfassten Mehrzahl von Bildern zu erfassen, wobei die Bildverarbeitungseinheit die Geschwindigkeit der Arbeitsbewegung in Abhängigkeit einer Position der Kante des ersten Maschinenteils als Geschwindigkeitsprofil auf der Grundlage der erfassten Bilder bestimmt, und wobei die Steuereinheit das Geschwindigkeitsprofil mit einem Referenzgeschwindigkeitsprofil vergleicht.

Dadurch, dass die Geschwindigkeit des ersten Maschinenteils relativ zu dem Werkstück auf der Grundlage der Mehrzahl von erfassten Bildern bestimmt wird, kann im Allgemeinen auf technisch aufwendige Inkrementalgeber zur Bestimmung der Position des ersten Maschinenteils verzichtet werden, so dass der technische Aufwand zur Bestimmung der Geschwindigkeit der Arbeitsbewegung im Allgemeinen reduziert ist. Durch den Vergleich der erfassten Geschwindigkeit mit der Referenzgeschwindigkeit ist darüber hinaus die Erfassungs- und Verarbeitungsgeschwindigkeit erheblich reduziert, da die erfassten Daten nicht zyklisch eingelesen und von unterschiedlichen Modulen verarbeitet werden, so dass die Reaktionsgeschwindigkeit im Fehlerfall erheblich reduziert ist. Folglich kann die Bewegung eines Maschinenteils der überwachten Maschine mit einer reduzierten Reaktionszeit und mit technisch geringem Aufwand zuverlässig erfasst werden. Ferner kann die Geschwindigkeit der Kante des ersten Maschinenteils relativ zu dem Werkstück für jede Position überwacht und entsprechend abgesichert werden.

Die Aufgabe der vorliegenden Erfindung wird somit vollständig gelöst.

In einer Ausgestaltung der Erfindung wird die Geschwindigkeit während der Arbeitsbewegung zwischen einer vordefinierten Position der Kante des ersten Maschinenteils und einem Endpunkt der Arbeitsbewegung erfasst. Bevorzugt ist es dabei, dass ab einem vordefinierten Abstand des ersten Maschinenteils von dem Endpunkt der Arbeitsbewegung die Geschwindigkeit entsprechend erfasst und überwacht wird. Dadurch kann bei einem reduzierten Öffnungsspalt zwischen dem ersten Maschinenteil und dem Werkstück eine reduzierte Geschwindigkeit des ersten Maschinenteils gewährleistet werden, so dass entsprechend ein Nachlaufweg abgesichert werden kann.

In dieser Ausgestaltung ist es bevorzugt, wenn die vordefinierte Position der Kante des ersten Maschinenteils durch eine optische Messschranke bestimmt wird. Dabei ist es besonders bevorzugt, wenn die optische Messschranke als vorauseilende optische Messschranke ausgebildet ist, die in einem entsprechenden Abstand der Kante bzw. des ersten Maschinenteils von dem Werkstück unterbrochen wird und so die Geschwindigkeitsmessung in einem vordefinierten Abstand aktiviert.

Dadurch kann die Absicherung der Geschwindigkeit des ersten Maschinenteils ab einem vordefinierten Öffnungsspalt zuverlässig mit technisch geringem Aufwand gewährleistet werden.

In einer bevorzugten Ausgestaltung der Erfindung wird die Geschwindigkeit der Arbeitsbewegung zwischen der vordefinierten Position der Kante des ersten Maschinenteils und dem Endpunkt der Arbeitsbewegung kontinuierlich reduziert. In einer besonderen Ausgestaltung wird die Geschwindigkeit der Arbeitsbewegung durch einen Bremsvorgang des ersten Maschinenteils reduziert, wobei der Bremsvorgang eingeleitet wird bevor die Geschwindigkeit der Arbeitsbewegung erfasst und abgesichert wird.

Dadurch kann der Nachlaufweg des ersten Maschinenteils mit abnehmendem Abstand zu dem Werkstück durch die reduzierte Geschwindigkeit reduziert werden, wodurch die Sicherheit des Bedienpersonals erhöht werden kann.

In einer bevorzugten Ausgestaltung der Erfindung wird der Schutzbereich während der Arbeitsbewegung zwischen der vordefinierten Position und dem Endpunkt der Arbeitsbewegung entsprechend einem Abstand zwischen der Kante und dem Werkstück reduziert. Mit anderen Worten werden einzelne Schutzfelder, die dem Werkstück benachbart sind, entsprechend dem Abstand zwischen der Kante und dem Werkstück dynamisch deaktiviert.

Dadurch kann ein unbeabsichtigtes Stoppen der Arbeitsbewegung verhindert werden.

In einer bevorzugten Ausgestaltung wird die Erfassung der Geschwindigkeit der Arbeitsbewegung des ersten Maschinenteils relativ zu dem Werkstück zusammen mit der schrittweise Reduzierung des Schutzbereichs durch Deaktivierung von einzelnen Schutzfeldern durch die Unterbrechung der optischen Messschranke gestartet.

Dadurch wird die notwendige Überwachung der Geschwindigkeit und die entsprechende Reduzierung des Nachlaufweges durch die reduzierte Geschwindigkeit mit der Aktivierung der Schutzbereichsreduzierung aktiviert.

In einer bevorzugten Ausgestaltung der Erfindung wird die Referenzgeschwindigkeit in einem Konfigurationsschritt vorab konfiguriert.

Dadurch kann die Referenzgeschwindigkeit individuell angepasst und eingestellt werden und die Geschwindigkeit des ersten Maschinenteils entsprechend der notwendigen Anforderungen überwacht und sichergestellt werden.

Alternativ ist die Referenzgeschwindigkeit vor Inbetriebnahme der Maschine vordefiniert, so dass die Geschwindigkeit des ersten Maschinenteils relativ zu dem Werkstück mit geringem Aufwand abgesichert werden kann.

In einer bevorzugten Ausgestaltung der Erfindung ist das Referenzgeschwindigkeitsprofil durch eine Mehrzahl von Weg-Zeit-Wertepaaren definiert und in einer besonderen Ausgestaltung durch eine Gerade zwischen zwei Weg-Zeit-Wertepaaren definiert.

In einer bevorzugten Ausgestaltung wird die Position der Kante des ersten Maschinenteils als Abstand zu dem Werkstück erfasst.

Dadurch kann die Geschwindigkeit des ersten Maschinenteils entsprechend einer Größe des Öffnungsspalts zwischen der Kante des ersten Maschinenteils und dem Werkstück reduziert und die reduzierte Geschwindigkeit entsprechend erfasst werden.

In einer Ausgestaltung der Erfindung wird die Arbeitsbewegung des ersten Maschinenteils gestoppt, sofern die erfasste Geschwindigkeit größer ist als die Referenzgeschwindigkeit.

Dadurch kann die Geschwindigkeit des ersten Maschinenteils relativ zu dem Werkstück begrenzt werden, so dass ein Nachlaufweg des ersten Maschinenteils bei Abschaltung der Arbeitsbewegung entsprechend begrenzt und somit die Sicherheit des Bedienpersonals erhöht ist.

In einer Ausgestaltung der Erfindung ist der Schutzbereich als überwachter Bereich zwischen der Kante und dem zweiten Maschinenteil von der Kante des ersten Maschinenteils (20) beabstandet, wobei der Abstand des Schutzbereichs von der Kante variabel einstellbar ist.

Dadurch kann der Abstand des Schutzbereichs individuell an die entsprechenden Anforderungen der Produktion angepasst werden, wobei der Abstand minimal gewählt werden kann, um eine möglichst hohe Geschwindigkeit der Arbeitsbewegung realisieren zu können und das Werkstück mit einer hohen Geschwindigkeit anfahren zu können, wobei zur Vermeidung von nicht sicherheitsrelevanten Abschaltungen und Abschaltungen durch Anlagerungen von Werkzeugspänen der Abstand entsprechend größer gewählt werden kann. Eine individuelle produktionsangepasste Überwachung des Schutzbereichs ist dadurch möglich.

In einer bevorzugten Ausgestaltung der Erfindung werden unterschiedliche Positionen des ersten Maschinenteils und/oder des Werkstücks auf der Grundlage von Mustererkennung in der Mehrzahl von Bildern bestimmt, wobei die Geschwindigkeit der Arbeitsbewegung auf der Grundlage einer zeitlichen und räumlichen Differenz der erfassten Positionen erfasst wird. Dabei wird vorzugsweise mittels eines Kanten-Detektions-Algorithmus in einem Graustufenbild eine Oberkante des Werkstücks erfasst.

Dadurch kann ein räumlicher Abstand zwischen der Kante und dem Werkstück und entsprechend die Geschwindigkeit der Arbeitsbewegung mit einer hohen Auflösung erfasst werden, so dass eine präzise Bestimmung der Geschwindigkeit der Arbeitsbewegung möglich ist.

In einer bevorzugten Ausgestaltung werden dabei die Positionen des ersten Maschinenteils und/oder des Werkstücks auf der Grundlage einer Interpolation zwischen erkannten Mustern der Mehrzahl von Bildern erfasst. Dabei wird insbesondere eine Parabelinterpolation durchgeführt.

Dadurch ist die Erfassung der Positionen des ersten Maschinenteils und/oder des Werkstücks in einer räumlichen Auflösung kleiner als ein Pixel möglich.

In einer bevorzugten Ausführungsform werden die Messwerte der unterschiedlichen Positionen und die Messwerte der Geschwindigkeit der Arbeitsbewegung durch einen Tiefpassfilter gefiltert.

Dadurch können Störungen bei der Erfassung der unterschiedlichen Positionen und der Geschwindigkeit reduziert werden.

In einer bevorzugten Ausführungsform werden die unterschiedlichen Positionen des ersten Maschinenteils und/oder des Werkstücks in der Mehrzahl von Bildern auf der Grundlage einzelner Bildpunktsignale erfasst, wobei die Geschwindigkeit der Arbeitsbewegung auf der Grundlage einer zeitlichen Differenz der Bildpunktsignale und auf der Grundlage eines Abstandes der entsprechenden Bildpunkte ermittelt. Dabei werden insbesondere die Zeit einer erstmaligen Unterbrechung eines entsprechenden Bildpunkts gespeichert und über eine Division des Abstands von zwei Pixeln und der dazugehörigen zeitlichen Differenz der Signalunterbrechung die Geschwindigkeit der Arbeitsbewegung ermittelt.

Dadurch kann die Geschwindigkeit der Arbeitsbewegung auf der Grundlage der Bilddaten mit technisch geringem Aufwand ermittelt werden.

In einer besonderen Ausgestaltung wird dabei die Position des ersten Maschinenteils und/oder des Werkstücks auf der Grundlage eines festen Schwellenwertes der einzelnen Bildpunktsignale erfasst.

Dadurch kann mit technisch geringem Aufwand zuverlässig die Position des ersten Maschinenteils und/oder des Werkstücks auf der Grundlage von einzelnen Bildpunktsignalen erfasst werden.

In einer bevorzugten Ausgestaltung der Erfindung werden die Mehrzahl von Bildern mit einem vordefinierten zeitlichen Abstand erfasst.

Dadurch kann die Geschwindigkeit der Arbeitsbewegung mit technisch geringem Aufwand und zuverlässig ermittelt werden.

In einer bevorzugten Ausgestaltung der Erfindung wird die Mehrzahl von Bildern durch ein Bildsensor mit einer Mehrzahl von Bildpunkten erfasst.

Dadurch ist mit technisch geringem Aufwand eine Erfassung der Geschwindigkeit der Arbeitsbewegung möglich.

In einer bevorzugten Ausführungsform der Erfindung wird der Schutzbereich durch ein Lichtsender beleuchtet und auf den Bildsensor projiziert. Dabei ist vorzugsweise der Schutzbereich zwischen dem Lichtsender und dem Bildsensor angeordnet.

Dadurch ist mit technisch geringem Aufwand eine zuverlässige Überwachung des Schutzbereichs und eine zuverlässige Bestimmung der Geschwindigkeit der Arbeitsbewegung möglich.

In einer bevorzugten Ausführungsform wird der Bildsensor mit dem ersten Maschinenteil mitbewegt. Dabei ist der Bildsensor vorzugsweise mit dem ersten Maschinenteil mechanisch fest verbunden.

Dadurch ist eine optische Ausrichtung des Bildsensors mit technisch geringem Aufwand möglich und eine zuverlässige Erfassung des Schutzbereichs während der Arbeitsbewegung möglich.

Insgesamt ermöglicht das erfindungsgemäße Verfahren und die erfindungsgemäße Sicherheitseinrichtung mit technisch geringem Aufwand eine sichere Bestimmung der Geschwindigkeit des ersten Maschinenteils relativ zu dem Werkstück und somit eine zuverlässige Absicherung eines Nachlaufweges mit einer kurzen Reaktionszeit, so dass insgesamt die Sicherheit des Bedienpersonals gewährleistet werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung einer Biegepresse mit einer Sicherheitseinrichtung ;
Fig. 2 ein Diagramm zur Erläuterung einer Bremsrampe eines Maschinenteils der Biegepresse aus Fig. 1;
Fig. 3 eine schematische Darstellung eines Abbildes eines Schutzbereichs der Biegepresse aus Fig. 1; und
Fig. 4 ein schematisches Ablaufdiagramm zur Erläuterung des Verfahrens zum Überwachen der Biegepresse aus Fig. 1.

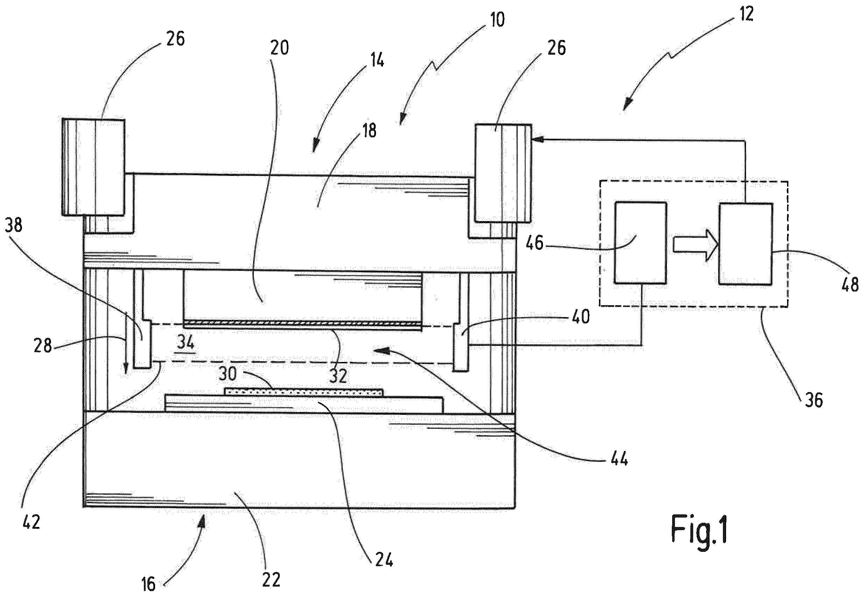

In Fig. 1 ist eine Biegepresse als eine bevorzugte Maschine für eine Sicherheitseinrichtung in ihrer Gesamtheit dargestellt und allgemein mit 10 bezeichnet. An der Biegepresse 10 kommt eine Sicherheitseinrichtung 12 nach einem Ausführungsbeispiel der vorliegenden Erfindung zur Anwendung, um eine Verletzung von Bedienpersonen im Arbeitsablauf der Biegepresse 10 zu verhindern. Die Anwendung der Sicherheitseinrichtung 12 gemäß der vorliegenden Erfindung ist nicht auf Biegepressen beschränkt sondern kann bei Pressen im Allgemeinen und auch bei anderen Maschinen eingesetzt werden, bei denen zwei Maschinenteils eine Arbeitsbewegung gegeneinander ausführen, wie z.B. bei Stanz- und Schneidmaschinen.

Die Biegepresse 10 weist ein erstes, in diesem Fall oberes Maschinenteil 14 und ein zweites, unteres Maschinenteil 16 auf. Das erste Maschinenteil 14 weist eine Oberwange 18 auf, an der ein Oberwerkzeug 20 beispielsweise ein Biegestempel angeordnet ist. Das zweite Maschinenteil 16 weist eine Unterwange 22 auf, an der ein Unterwerkzeug 24, beispielsweise eine Matrize angeordnet ist. Das erste Maschinenteil kann über einen Antrieb 26 eine Arbeitsbewegung in Richtung eines Pfeils 28 ausführen. Das Oberwerkzeug 20 (Biegestempel) und das Unterwerkzeug 24 (Matrize) bilden zusammen ein Presswerkzeug, mit dem ein Werkstück 30 bearbeitet bzw. umgeformt werden kann. Bei dem Werkstück 30 handelt es sich in der Regel um ein metallisches Blechteil.

Das Oberwerkzeug 20 weist eine vorlaufende Kante 32 auf, die aufgrund der Arbeitsbewegung 28 eine Bewegungsebene 34 definiert. Jeder Eingriff eines Objekts in die Bewegungsebene 34 wie etwa ein Eingriff mit einer Hand eines Bedieners, stellt eine Gefahrensituation dar, insbesondere wenn sich das Oberwerkzeug 20 bereits dicht an das Unterwerkzeug 24 angenähert hat. Die Sicherheitseinrichtung 12, zu der auch eine Steuereinheit 36 gehört, dient dazu, eine Bewegung des Oberwerkzeugs 20 bis zum Erreichen einer sicheren reduzierten Geschwindigkeit oder bis ein Öffnungsspalt zwischen dem Oberwerkzeug 20 und dem Werkstück 30 einen vordefinierten Wert unterschreitet, abzusichern. Diese reduzierte Geschwindigkeit darf nicht überschritten werden, um im Falle einer Abschaltung einen Nachlaufweg des Oberwerkzeugs 20 zu begrenzen und so die Sicherheit eines Bedieners in einer Gefahrensituation zu gewährleisten.

Die Sicherheitseinrichtung 12 weist einen Lichtsender 38 und einen Bildsensor 40 auf, die hier jeweils an der Oberwange 18 befestigt sind. Der Lichtsender 38 und der Bildsensor 40 sind mit der Oberwange 18 gekoppelt, so dass sie mit der Arbeitsbewegung des Oberwerkzeugs mitlaufen. Alternativ können der Lichtsensor 38 und der Bildsensor 40 mit dem Unterwerkzeug 16 oder einem Rahmen der Biegepresse 10 gekoppelt sein. Der Lichtsender 38 erzeugt Lichtstrahlen 42, die parallel zu der vorlaufenden Kante 32 des Oberwerkzeugs 20 verlaufen und den Bildsensor 40 beleuchten. Dementsprechend bilden der Lichtsender 38 und der Bildsensor 40 eine Lichtschranke, durch die ein Schutzbereich 44 zwischen dem Oberwerkzeug 20 und dem Unterwerkzeug 24 gebildet ist, um eine Position des Oberwerkzeugs 20 relativ zu dem Unterwerkzeug 24 zu erfassen und eine Geschwindigkeit der Arbeitsbewegung 28 des Oberwerkzeugs 20 relativ zu dem Unterwerkzeug 24 zu erfassen.

Der Bildsensor 40 weist eine Mehrzahl von Pixeln auf und nimmt in einem vordefinierten Zeitraster eine Vielzahl von ortsaufgelösten Abbildern auf, die jeweils die Kante 32 des Oberwerkzeugs 20 und wenigstens einen Teil des Werkstücks 30 zeigen bzw. beinhalten. Die ortsaufgelösten Abbilder beinhalten ferner den Schutzbereich 44 zwischen dem Oberwerkzeug 20 und dem Unterwerkzeug 24.

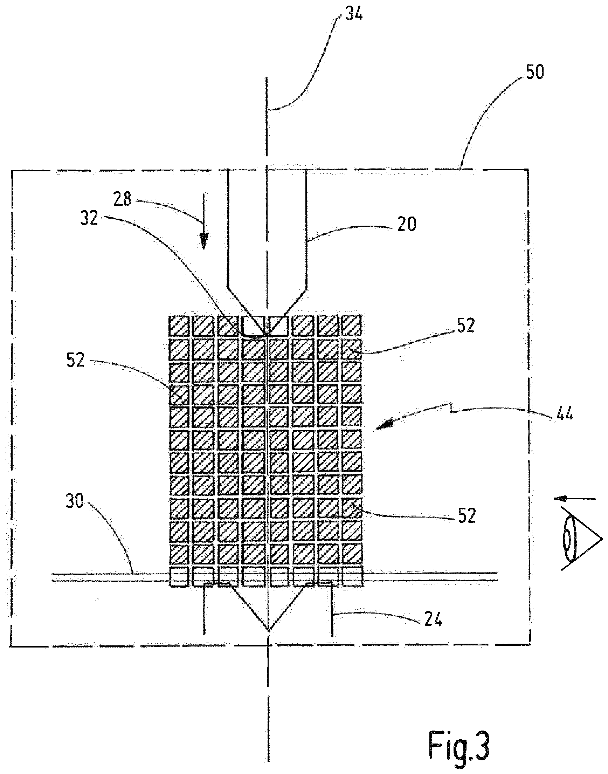

Der Lichtsender 38 weist eine Lichtquelle auf, die in einer besonders bevorzugten Ausführungsform eine sogenannte Power-LED ist. Prinzipiell könnte der Lichtsender jedoch auch eine Laserdiode, Leuchtstoffröhre, Halogenlampe oder eine andere Lichtquelle aufweisen. Der Bildsensor 40 mit der Vielzahl von Pixeln ist vorzugsweise ein Bildsensor mit einer matrixartigen Anordnung der Pixel, wie dies in Fig. 3 schematisch dargestellt ist. Der Bildsensor 40 ist vorzugsweise ein CMOS-Bildsensor mit einer logarithmischen Wandlerkennlinie. Der Bildsensor 40 kann eine Abbildungsoptik aufweisen, um eine entsprechende Abbildung der Kante 32, des Schutzbereichs 44 sowie eines Teils des Werkstücks 30 zu gewährleisten.

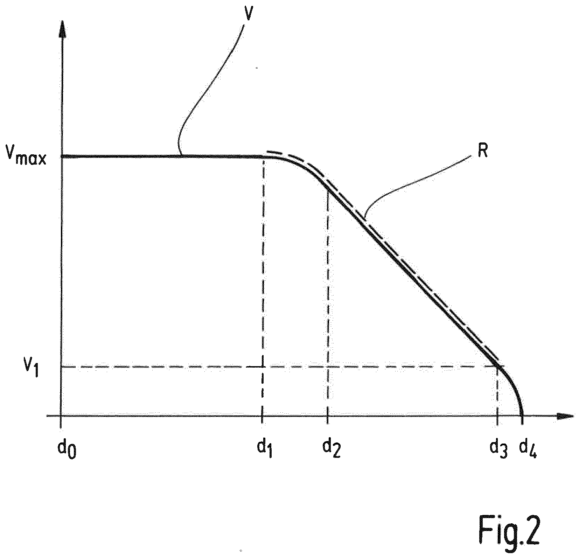

Zu der Sicherheitseinrichtung 12 gehört ferner die Steuereinheit 36. Die Steuereinheit 36 kann separat von dem Lichtsender 38 und dem Bildsensor 40 angeordnet sein. Alternativ kann die Steuereinheit 36 ganz oder teilweise in dem Lichtsender 38 und/oder dem Bildsensor 40 integriert sein. Die Steuereinheit 36 weist eine Bildverarbeitungseinheit 46 auf, die mit dem Bildsensor 40 gekoppelt ist und dient dazu, die Mehrzahl von Bildern, die von dem Bildsensor 40 aufgenommen werden, auszuwerten und entsprechend auf der Grundlage der Bilder eine Position des Oberwerkzeugs 20 relativ zu dem Unterwerkzeug 24 zu bestimmen und eine Geschwindigkeit der Arbeitsbewegung 28 des Oberwerkzeugs 20 relativ zu dem Unterwerkzeug 24 zu bestimmen. Die Auswertung der Bilder des Bildsensors 40 erfolgt dabei vorzugsweise auf der Grundlage von Mustererkennung oder auf der Grundlage von einzelnen Bildpunktsignalen der Pixel des Bildsensors 40 wie es im Weiteren näher erläutert ist. Die Auswerteeinheit 46 bestimmt die Geschwindigkeit des Oberwerkzeugs 20 relativ zu dem Unterwerkzeug 24 als Geschwindigkeitsprofil in Abhängigkeit einer Position des Oberwerkzeugs 20 bzw. in Abhängigkeit eines Abstandes zwischen der Kante 32 und dem Werkstück 30 bzw. dem Unterwerkzeug 24. Ein Beispiel für ein derartiges Geschwindigkeitsprofil ist in Fig. 2 schematisch dargestellt.

Die Auswerteeinheit 46 und eine Steuerschaltung 48 sind Teil der Steuereinheit 36. Die Auswerteeinheit 46 überträgt das bestimmte Geschwindigkeitsprofil bzw. die erfasste Geschwindigkeit des Oberwerkzeugs 20 relativ zu dem Unterwerkzeug 24 in Abhängigkeit der jeweiligen Position des Oberwerkzeugs 20 bzw. des Abstandes des Oberwerkzeugs 20 zu dem Unterwerkzeug 24 an die Steuerschaltung 48. Die Steuerschaltung 48 vergleicht die Geschwindigkeit der Arbeitsbewegung 28 mit einer Referenzgeschwindigkeit der Arbeitsbewegung 28 bzw. mit einem Referenzgeschwindigkeitsprofil der Arbeitsbewegung 28. Sofern die erfasste Geschwindigkeit der Arbeitsbewegung 28 von der Referenzgeschwindigkeit der Arbeitsbewegung 28 abweicht und insbesondere sofern die Geschwindigkeit der Arbeitsbewegung 28 größer ist als die Referenzgeschwindigkeit wird ein entsprechendes Steuersignal von der Steuerschaltung 48 an den Antrieb 26 übertragen und entsprechend die Arbeitsbewegung 28 des Oberwerkzeugs 20 angehalten.

Während der Arbeitsbewegung 28 werden Schutzfelder des Schutzbereichs 44 in der Nähe des Werkstücks 30 mit abnehmendem Abstand des Oberwerkzeugs 20 relativ zu dem Unterwerkzeug 24 deaktiviert, um eine unbeabsichtigte Unterbrechung der Arbeitsbewegung 28 durch ein Unterbrechen des entsprechenden Schutzfeldes durch das Werkstück oder andere Gegenstände wie z.B. Werkstückspäne zu verhindern. Mit abnehmendem Abstand zwischen der Kante 32 und dem Werkstück 30 werden schrittweise zunehmend entsprechend Schutzfelder deaktiviert, wobei gleichzeitig die Geschwindigkeit der Arbeitsbewegung 28 reduziert werden muss, um einen Nachlaufweg des Oberwerkzeugs 20 bzw. der Kante 32 bei einer Schutzabschaltung zu reduzieren bzw. zu begrenzen und die Sicherheit für das Bedienpersonal entsprechend zu gewährleisten. Die Geschwindigkeit der Arbeitsbewegung 28 wird daher mit der Deaktivierung des ersten Schutzfeldes reduziert und vorzugsweise mit einem linearen Geschwindigkeitsverlauf reduziert. Die Überwachung der Geschwindigkeit des Oberwerkzeugs 20 relativ zu dem Unterwerkzeug 24 wird gestartet mit der Deaktivierung des ersten Schutzfeldes, wobei die entsprechende Position des Oberwerkzeugs 20 bzw. der Abstand des Oberwerkzeugs 20 von dem Unterwerkzeug 24 durch die Unterbrechung eines vorauseilenden Messstrahls durch das Werkstück 30 erfasst wird und entsprechend das erste Schutzfeld deaktiviert und die Geschwindigkeitsüberwachung aktiviert wird. Die Geschwindigkeit der Arbeitsbewegung 28 wird derart reduziert, dass, mit Deaktivieren des letzten Schutzfeldes des Schutzbereichs 44 eine vordefinierte Geschwindigkeit der Arbeitsbewegung 28 erreicht ist, die vorzugsweise kleiner oder gleich 10 mm/s ist.

Durch die Überwachung der Geschwindigkeit im Bereich des Startpunkts der Geschwindigkeitsreduzierung bzw. der Bremsrampe kann auch ein Klemmpunkt, d.h. eine Position der Oberkante des Werkstücks 30 relativ zu der Kante 32 ermittelt werden. Das Referenzgeschwindigkeitsprofil definiert den Startpunkt der Geschwindigkeitsreduktion der Arbeitsbewegung 28 bzw. den Startpunkt der Bremsrampe und unterscheidet sich von einem gemessenen Geschwindigkeitsprofil der Arbeitsbewegung 28 mit einem Gegenstand auf dem Werkstück 30 wie z.B. einer aufgelegten Hand. Sofern das gemessene Geschwindigkeitsprofil von dem Referenzprofil abweicht, wird die Arbeitsbewegung 28 entsprechend gestoppt bzw. unterbrochen. Dadurch kann im Allgemeinen auf eine Klemmpunktüberwachung mit Inkrementalgeber und entsprechend erfassten Positionswerten verzichtet werden.

Das Referenzgeschwindigkeitsprofil wird in einem Konfigurationsschritt einmalig konfiguriert bzw. bestimmt, wobei in einem einfachsten Fall das Referenzgeschwindigkeitsprofil durch zwei Weg-Geschwindigkeits-Wertepaare definiert ist, die durch eine Gerade verbunden werden. Derartige Wertepaare weisen vorzugsweise einen maximalen Abstand zueinander auf und bilden vorzugsweise Endpunkte der Geschwindigkeitsgeraden bzw. der Bremsrampe. Die Position der Kante 32 in dem Referenzgeschwindigkeitsprofil stellt dabei einen Abstand der Kante 32 zu dem Klemmpunkt, d.h. der Oberkante des Werkstücks 30 dar und ist somit identisch mit einem Öffnungsspalt zwischen der Kante 32 und dem Werkstück 30. Die Konfiguration der Positionen bzw. der Weg-Parameter erfolgt vorzugsweise in Schritten von 0,1 mm bei einer Geschwindigkeit von 1 mm/s. Alternativ kann die Konfiguration vordefiniert sein und in einem Speicher in der Auswerteeinheit 46 abgelegt sein.

In einer besonderen Ausführungsform kann der Abstand des Schutzbereichs 44 relativ zu der Kante 32 einstellbar ausgebildet sein. Dabei kann der Anwender die Position der Kante 32 entsprechend festlegen, bei der das Schutzfeld deaktiviert wird. Der Abstand des Schutzbereichs 44 von der Kante 32 des Oberwerkzeugs 20 kann dabei frei gewählt werden und vorzugsweise in 0,4 mm Schritten zwischen einem Abstand von 1,6 mm und 4 mm konfiguriert werden. Dadurch kann der Abstand des Schutzbereichs 44 von dem Werkzeug 32 im Hinblick auf die davon abhängige Geschwindigkeit der Arbeitsbewegung 28 eingestellt werden, wobei die Geschwindigkeit der Arbeitsbewegung 28 bei einem geringen Abstand größer gewählt werden kann bzw. die Bremsrampe steiler gewählt werden kann und bei einem größeren Abstand geringer gewählt werden muss bzw. eine geringere Steigung aufweisen muss.

In Fig. 2 ist ein Diagramm der Geschwindigkeit V der Arbeitsbewegung 28 in Abhängigkeit einer Position der Kante 32 schematisch dargestellt. Die Geschwindigkeit V der Arbeitsbewegung 28 verläuft von einem Startpunkt d₀ als Beginn der Arbeitsbewegung mit einer maximalen Geschwindigkeit Vₘₐₓ konstant bis zu einer Position d₁. An der Position d₁ wird die Geschwindigkeit der Arbeitsbewegung 28 reduziert. An der Position d₂ wird mit der Unterbrechung des vorauseilenden Messstrahls durch das Werkstück 30 die Deaktivierung von Schutzfeldern im Bereich des Werkstücks 30 eingeleitet bzw. gestartet. Die Geschwindigkeit V der Arbeitsbewegung 28 wird bis zu einer Position d₃ vorzugsweise linear reduziert. An der Position d₃ wird ein letztes Schutzfeld des Schutzbereichs 44 deaktiviert und die Geschwindigkeit V weist einen Wert V₁ auf, der kleiner oder gleich 10 mm/s beträgt. Nach Durchlaufen der Position d₃ wird ein Endpunkt der Arbeitsbewegung 28 erreicht, an dem die Kante 32 das Werkstück 30 kontaktiert, so dass die Geschwindigkeit der Arbeitsbewegung 28 bis zur Position d₄ auf null reduziert wird und das Oberwerkzeug 20 entsprechend zum Stillstand kommt.

In Fig. 2 ist die Referenzgeschwindigkeit R schematisch gestrichelt dargestellt, wobei die Referenzgeschwindigkeit R an jeder Position zwischen d₁ und d₃ einen maximal zulässigen Wert für die Geschwindigkeit der Arbeitsbewegung 28 darstellt. Sofern die Geschwindigkeit der Arbeitsbewegung 28 die Referenzgeschwindigkeit R überschreitet, wird die Arbeitsbewegung 28 gestoppt bzw. unterbrochen, so dass das Oberwerkzeug 20 zum Stillstand kommt. Dadurch kann die notwendige Reduzierung der Arbeitsgeschwindigkeit 28 zuverlässig überwacht werden und ein entsprechender Nachlaufweg bei einer Notabschaltung begrenzt werden.

Die Geschwindigkeit V wird vorzugsweise linear reduziert, wie es in Fig. 2 gezeigt ist, wobei die Referenzgeschwindigkeit vorzugsweise über zwei Weg-Geschwindigkeits-Wertepaare definiert ist.

Die Positionen d₁, d₂ und d₃ entsprechen jeweils während der Arbeitsbewegung 28 einem Abstand der Kante 32 zu dem Werkstück 30.

Fig. 3 zeigt eine vereinfachte Darstellung eines Bildes 50, das von dem Bildsensor 14 aufgenommen wird und das im Allgemeinen (jeweils wenigstens teilweise) ein Abbild des Oberwerkzeugs 20 mit der Kante 32, des Werkstücks 30 und des Unterwerkzeugs 24 sowie des Schutzbereichs 44 zeigt. Die Blickrichtung aus Fig. 1 ist in Fig. 3 schematisch dargestellt. Das Bild 50 des Bildsensors 40 weist eine Vielzahl von Bildpunkten 52 auf, von denen hier schematisch lediglich einige dargestellt sind. Auf der Grundlage einer Mehrzahl von Bildern des Bildsensors 40 wird die Position der Kante 32 relativ zu dem Werkstück 30 sowie die Geschwindigkeit der Arbeitsbewegung 28 der Kante 32 relativ zu dem Werkstück 30 erfasst, um die Geschwindigkeit der Arbeitsbewegung 28 insbesondere während des Bremsvorgangs zu überwachen und entsprechend für eine Notabschaltung den Nachlaufweg zu begrenzen. Der Bildsensor 40 kann von einer gegenüberliegenden Seite durch den Lichtsender 38 beleuchtet werden, so dass die Kante 32 des Oberwerkzeugs 20 sowie das Werkstück 30 ein Schattenbild in dem Abbild 40 erzeugt.

Zur Überwachung der Geschwindigkeit der Arbeitsbewegung 28 und zur Überwachung des Klemmpunkts kann die Position der Kante 32 relativ zu dem Werkstück 30 und aus dem zeitlichen Verlauf der Position die Geschwindigkeit der Arbeitsbewegung 28 mittels zwei unterschiedlichen Algorithmen ermittelt werden.

Gemäß einer ersten Ausführungsform kann die Position der Kante 32 und des Werkstücks 30 auf der Grundlage von Bildpunktsignalen der einzelnen Pixel 52 ermittelt werden, wobei eine Position der Kante 32 und des Werkstücks 30 erfasst wird, sofern das jeweilige Bildpunktsignal einen vordefinierten Schwellenwert unterschreitet. Mit anderen Worten wird die Position der Kante 32 und des Werkstücks 30 auf der Grundlage des Schattenbildes erfasst, das durch das Oberwerkzeug 20 und das Werkstück 30 durch die Beleuchtung von dem Lichtsender 38 erzeugt wird.

Bei einer erstmaligen Unterbrechung eines Bildpunktsignals durch das entsprechende Schattenbild wird der Zeitpunkt der Unterbrechung gespeichert. Über die Division des Abstands von zwei Bildpunkten 52 bzw. Pixeln, die nacheinander unterbrochen werden und der Differenz des zugehörigen Unterbrechungszeitpunkts kann die Geschwindigkeit der Arbeitsbewegung 28 der Kante 32 relativ zu dem Werkstück 30 berechnet werden. Die zeitliche Auflösung dieses Verfahrens entspricht der Bildfolge der Einzelbilder des Bildsensors 40 und die räumliche Auflösung entspricht dem Raster der Bildpunkte 52 bzw. der Pixel des Bildsensors 40.

Gemäß einer alternativen Ausführungsform wird die Position der Kante 32 und des Werkstücks 30 und der zeitliche Verlauf der Position zur Ermittlung der Geschwindigkeit der Arbeitsbewegung 28 durch eine Mustererkennung bzw. eine Kantendetektion in einem Graustufenbild des Bildes 50 ermittelt. Die Position der Kante 32 bzw. des Werkstücks 30 werden vorzugsweise mittels einer Parabel-Interpolation ermittelt. Die Geschwindigkeit der Arbeitsbewegung 28 wird dabei über eine Division des aus der Kantendetektion bzw. der Mustererkennung ermittelten räumlichen Abstands der Kante 32 und des Werkstücks 30 und die entsprechende zeitliche Differenz der zugehörigen Bilder ermittelt. Die zeitliche Auflösung dieses Verfahrens entspricht dem zeitlichen Abstand der aufgenommenen Bilder des Bildsensors 14, wobei die räumliche Auflösung durch die Parabel-Interpolation kleiner ist als das Raster der Bildpunkte 52 bzw. der Pixel. In einer besonderen Ausführungsform werden die Bilder 50 des Bildsensors 40 durch einen Schwarzweiß-Tiefpass-Filter gefiltert, um Störungen herauszufiltern und Messfehler zu vermeiden.

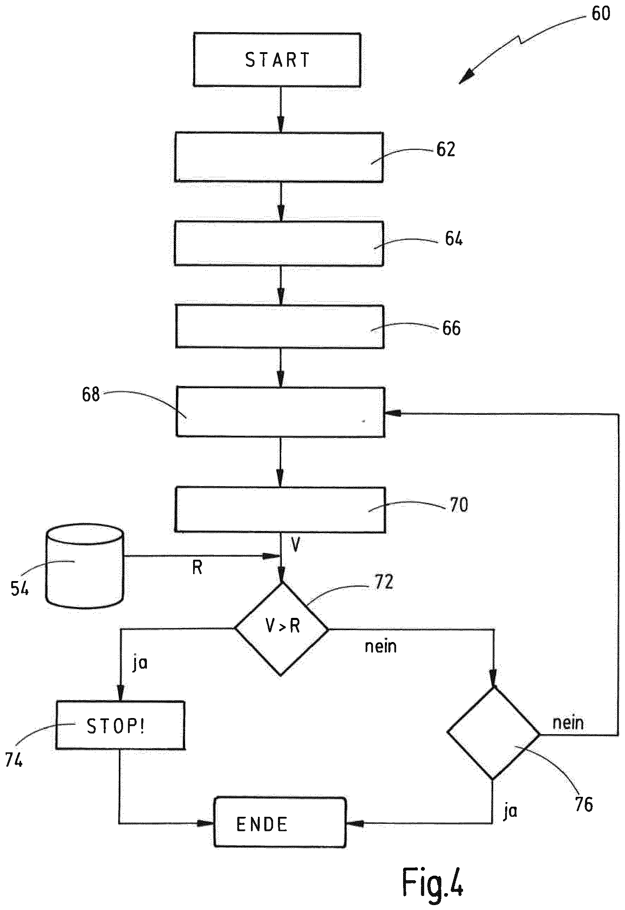

In Fig. 4 ist ein Ablaufdiagramm eines Ausführungsbeispiels eines Verfahrens zum Überwachen der Arbeitsbewegung 28 dargestellt. Das Verfahren ist allgemein mit 60 bezeichnet.

Das Verfahren 60 beginnt bei Schritt 62 mit dem Herunterfahren des Oberwerkzeugs 20 so lange, bis die optische Messschranke unterbrochen wird (Schritt 64). Sobald die optische Schranke unterbrochen wird, wird die Arbeitsgeschwindigkeit 28 des Oberwerkzeugs 20 abgebremst und gleichzeitig das erste Schutzfeld des Schutzbereichs 44 deaktiviert (Schritt 66). Mit oder nach Einleiten des Bremsvorgangs werden eine Mehrzahl von Bildern 50 durch den Bildsensor 40 erfasst, wobei die Bilder 50 jeweils ein Abbild der Kante 32 und des Werkstücks 30 beinhalten (Schritt 68). Aus den Bildern 50 wird die Position der Kante 32 bzw. des Oberwerkzeugs 20 relativ zu dem Werkstück 30 bestimmt sowie eine Geschwindigkeit V der Arbeitsbewegung 28 des Oberwerkzeugs 20 relativ zu dem Werkstück 30 (Schritt 70).

Die Geschwindigkeit V der Arbeitsbewegung 28 wird mit einer Referenzgeschwindigkeit R, die in einem Speicher 54 abgelegt ist, verglichen, wie es in Schritt 72 gezeigt ist. Sofern die erfasste Geschwindigkeit V der Arbeitsbewegung 28 größer ist als die Referenzgeschwindigkeit R, wird gemäß Schritt 74 ein Not-Stopp ausgelöst und die Arbeitsbewegung 28 des Oberwerkzeugs 20 angehalten.

Sofern bei Schritt 72 festgestellt wird, dass die erfasste Geschwindigkeit V kleiner oder gleich der Referenzgeschwindigkeit R ist, wird bei Schritt 76 geprüft, ob ein letztes Schutzfeld des Schutzbereichs 44 bereits deaktiviert ist oder ein Ende des Referenzgeschwindigkeitsprofils R bei d₃ erreicht ist. Sofern ein letztes der Schutzfelder deaktiviert ist oder das Referenzgeschwindigkeitsprofil durchlaufen ist, endet das Verfahren 60. Sofern noch Schutzfelder des Schutzbereichs 44 aktiv sind oder das Geschwindigkeitsreferenzprofil nicht vollständig durchlaufen ist, kehrt das Verfahren zu Schritt 68 zurück und erfasst ein oder mehrere weitere Bilder 50 mittels des Bildsensors 40.

Durch das Verfahren 60 kann mit technisch geringem Aufwand der Bremsvorgang des Oberwerkzeugs 20 überwacht werden und eine maximale Geschwindigkeit der Arbeitsbewegung 28 in Abhängigkeit der jeweiligen Position des Oberwerkzeugs 20 relativ zu dem Unterwerkzeug 24 überprüft werden. Ferner kann der Klemmpunkt also die Position der Kante 32 relativ zu dem Werkstück 30 überwacht werden. Die Klemmpunktüberwachung beginnt zusammen mit der Unterbrechung der optischen Messschranke, wobei der Bremsvorgang der Arbeitsbewegung 28 vor Start der Klemmpunktüberwachung eingeleitet wird.

## Patentansprüche

1. Verfahren (60) zum Überwachen einer Maschine (10), wobei ein erstes Maschinenteil (20) eine Arbeitsbewegung (28) gegen ein zweites Maschinenteil (24) ausführt, um ein Werkstück (30) zu bearbeiten, und wobei das erste Maschinenteil (20) eine in Bewegungsrichtung vorlaufende Kante (32) aufweist, die eine Bewegungsebene (34) definiert, mit den Schritten:
- Erfassen (68) einer Mehrzahl von Bildern (50) mit einer Vielzahl von Bildpunkten (52), wobei die Bilder jeweils ortsaufgelöste Abbilder der Kante (32), wenigstens eines Teils des Werkstücks (30) und eines Schutzbereichs (44) zwischen der Kante und dem zweiten Maschinenteil (24) aufweisen,
- Erfassen (70) einer Geschwindigkeit (V) der Arbeitsbewegung (28) des ersten Maschinenteils (20) relativ zu dem Werkstück (30),
- Vergleichen (72) der erfassten Geschwindigkeit (V) mit einer Referenzgeschwindigkeit (R) der Arbeitsbewegung, und
- Stoppen (74) der Arbeitsbewegung (28) sofern die erfasste Geschwindigkeit (V) von der Referenzgeschwindigkeit (R) abweicht,
**dadurch gekennzeichnet, dass** die Geschwindigkeit (V) der Arbeitsbewegung (28) des ersten Maschinenteils (20) relativ zu dem Werkstück (30) auf der Grundlage der erfassten Mehrzahl von Bildern (50) erfasst wird, wobei die Geschwindigkeit (V) der Arbeitsbewegung (28) in Abhängigkeit einer Position der Kante (32) des ersten Maschinenteils (20) als Geschwindigkeitsprofil auf der Grundlage der erfassten Bilder (50) bestimmt wird, und wobei das Geschwindigkeitsprofil mit einem Referenzgeschwindigkeitsprofil verglichen wird.

2. Verfahren nach Anspruch 1, wobei die Geschwindigkeit (V) während der Arbeitsbewegung (28) zwischen einer vordefinierten Position (d₁) der Kante (32) des ersten Maschinenteils (20) und einem Endpunkt (d₄) der Arbeitsbewegung (28) erfasst wird.

3. Verfahren nach Anspruch 2, wobei die vordefinierte Position (d₁) der Kante (32) des ersten Maschinenteils (20) durch eine optische Messschranke bestimmt wird.

4. Verfahren nach Anspruch 2 oder 3, wobei die Geschwindigkeit der Arbeitsbewegung zwischen der vordefinierten Position (d₁) der Kante (32) des ersten Maschinenteils (20) und dem Endpunkt (d₄) der Arbeitsbewegung (28) kontinuierlich reduziert wird.

5. Verfahren nach Anspruch 3 oder 4, wobei der Schutzbereich (44) während der Arbeitsbewegung (28) zwischen der vordefinierten Position (d₁) und dem Endpunkt (d₄) der Arbeitsbewegung entsprechend eines Abstandes der Kante (32) zu dem Werkstück (30) reduziert wird.

6. Verfahren nach einem der Ansprüche 1 bis 5, wobei die Referenzgeschwindigkeit (R) in einem Konfigurationsschritt vorab konfiguriert wird.

7. Verfahren nach einem der Ansprüche 1 bis 6, wobei die Position der Kante (32) des ersten Maschinenteils als Abstand zu dem Werkstück (30) erfasst wird.

8. Verfahren nach einem der Ansprüche 1 bis 7, wobei die Arbeitsbewegung (28) des ersten Maschinenteils (20) gestoppt wird, sofern die erfasste Geschwindigkeit (V) größer als die Referenzgeschwindigkeit (R) ist.

9. Verfahren nach einem der Ansprüche 1 bis 8, wobei der Schutzbereich (44) als überwachter Bereich zwischen der Kante (32) und dem zweiten Maschinenteil von der Kante (32) des ersten Maschinenteils (20) beabstandet ist und der Abstand variabel einstellbar ist.

10. Verfahren nach einem der Ansprüche 1 bis 9, wobei unterschiedliche Positionen des ersten Maschinenteils (20) und/oder des Werkstücks (30) auf der Grundlage von Mustererkennung in der Mehrzahl von Bildern (50) bestimmt werden, und wobei die Geschwindigkeit (V) der Arbeitsbewegung (28) auf der Grundlage einer zeitlichen und räumlichen Differenz der erfassten Positionen erfasst wird.

11. Verfahren nach Anspruch 10, wobei die Positionen des ersten Maschinenteils (20) und/oder des Werkstücks (30) auf der Grundlage einer Interpolation zwischen erkannten Mustern der Mehrzahl von Bildern erfasst werden.

12. Verfahren nach einem der Ansprüche 1 bis 11, wobei unterschiedliche Positionen des ersten Maschinenteils (20) und/oder des Werkstücks (30) in der Mehrzahl von Bildern (50) auf der Grundlage einzelner Bildpunktsignale erfasst werden, und wobei die Geschwindigkeit (V) der Arbeitsbewegung (28) auf der Grundlage einer zeitlichen Differenz der Bildpunktsignale und auf der Grundlage eines Abstands der entsprechenden Bildpunkte (52) ermittelt werden.

13. Verfahren nach einem der Ansprüche 1 bis 12, wobei die Mehrzahl von Bildern (50) mit einem vordefinierten zeitlichen Abstand erfasst werden.

14. Verfahren nach einem der Ansprüche 1 bis 13, wobei die Mehrzahl von Bildern (50) durch einen Bildsensor (40) mit einer Mehrzahl von Bildpunkten erfasst werden.

15. Sicherheitseinrichtung (12) für eine Maschine (10), wobei ein erstes Maschinenteil (20) einer Arbeitsbewegung (28) gegen ein zweites Maschinenteil (24) ausführt, um ein Werkstück (30) zu bearbeiten, wobei das erste Maschinenteil (20) eine in Bewegungsrichtung vorlaufende Kante (32) aufweist, die eine Bewegungsebene (34) definiert, mit:
- Einem Bildsensor (40), der eine Vielzahl von Bildpunkten aufweist, um eine Mehrzahl von ortsaufgelösten Bildern (50) der Kante (32), wenigstens eines Teils des Werkstücks (30) und eines Schutzbereichs (44) zwischen der Kante (32) und dem zweiten Maschinenteil (24) aufzunehmen,
- einer Bildverarbeitungseinheit (46), die mit dem Bildsensor (40) gekoppelt ist, und
- einer Steuereinheit (48), die mit der Bildverarbeitungseinheit (46) gekoppelt ist und dazu ausgebildet ist eine erfasste Geschwindigkeit (V) der Arbeitsbewegung (28) des ersten Maschinenteils (20) relativ zu dem Werkstück (30) mit einer Referenzgeschwindigkeit (R) der Arbeitsbewegung (28) zu vergleichen und die Arbeitsbewegung (28) zu stoppen, sofern die erfasste Geschwindigkeit (V) von der Referenzgeschwindigkeit (R) abweicht,
**dadurch gekennzeichnet, dass** die Bildverarbeitungseinheit (46) eingerichtet ist, die Geschwindigkeit (V) der Arbeitsbewegung (28) des ersten Maschinenteils (20) relativ zu dem Werkstück (30) auf der Grundlage der erfassten Mehrzahl von Bildern (50) zu erfassen, wobei die Bildverarbeitungseinheit (46) die Geschwindigkeit (V) der Arbeitsbewegung (28) in Abhängigkeit einer Position der Kante (32) des ersten Maschinenteils (20) als Geschwindigkeitsprofil auf der Grundlage der erfassten Bilder (50) bestimmt, und wobei die Steuereinheit (48) das Geschwindigkeitsprofil mit einem Referenzgeschwindigkeitsprofil vergleicht.

## Claims

1. A method (60) for monitoring a machine (10), wherein a first machine part (20) carries out a working movement (28) towards a second machine part (24) in order to machine a workpiece (30), and wherein the first machine part (20) has a leading edge (32) in the movement direction, which leading edge defines a movement plane (34), comprising the following steps:
- acquiring (68) a plurality of images (50) having a plurality of pixels (52), wherein the respective images have spatially resolved representations of the edge (32), at least a part of the workpiece (30), and a protective region (44) between the edge and the second machine part (24),
- acquiring (70) a velocity (V) of the working movement (28) of the first machine part (20) in relation to the workpiece (30),
- comparing (72) the acquired velocity (V) to a reference velocity (R) of the working movement, and
- stopping (74) the working movement (28) if the acquired velocity (V) deviates from the reference velocity (R),
**characterized in that** the velocity (V) of the working movement (28) of the first machine part (20) in relation to the workpiece (30) is determined on the basis of the plurality of acquired images (50), wherein the velocity (V) of the working movement (28) is determined as a function of a position of the edge (32) of the first machine part (20) as a velocity profile on the basis of the acquired images (50), and wherein the velocity profile is compared to a reference velocity profile.

2. The method of claim 1, wherein the velocity (V) during the working movement (28) is acquired between a predefined position (d₁) of the edge (32) of the first machine part (20) and an end point (d₄) of the working movement (28).

3. The method of claim 2, wherein the predefined position (d₁) of the edge (32) of the first machine part (20) is determined by an optical measurement barrier.

4. The method of claim 2 or 3, wherein the velocity of the working movement is continuously reduced between the predefined position (d₁) of the edge (32) of the first machine part (20) and the end point (d₄) of the working movement (28).

5. The method of claim 3 or 4, wherein the protective region (44) is reduced during the working movement (28) between the predefined position (d₁) and the end point (d₄) of the working movement in accordance with a distance of the edge (32) from the workpiece (30).

6. The method of any one of claims 1 to 5, wherein the reference velocity (R) is configured beforehand in a configuration step.

7. The method of any one of claims 1 to 6, wherein the position of the edge (32) of the first machine part is acquired as a distance to the workpiece (30).

8. The method of any one of claims 1 to 7, wherein the working movement (28) of the first machine part (20) is stopped if the acquired velocity (V) is greater than the reference velocity (R).

9. The method of any one of claims 1 to 8, wherein the protective region (44), as a monitored region between the edge (32) and the second machine part, is spaced apart from the edge (32) of the first machine part (20) and the distance is variably adjustable.

10. The method of any one of claims 1 to 9, wherein different positions of the first machine part (20) and/or the workpiece (30) are determined on the basis of pattern recognition in the plurality of images (50), and wherein the velocity (V) of the working movement (28) is acquired on the basis of a temporal and spatial difference of the acquired positions.

11. The method of claim 10, wherein the positions of the first machine part (20) and/or the workpiece (30) are acquired on the basis of an interpolation between recognized patterns of the plurality of images.

12. The method of any one of claims 1 to 11, wherein different positions of the first machine part (20) and/or the workpiece (30) in the plurality of images (50) are acquired on the basis of individual pixel signals, and wherein the velocity (V) of the working movement (28) is ascertained on the basis of a temporal difference of the pixel signals and on the basis of a distance of the corresponding pixels (52).

13. The method of any one of claims 1 to 12, wherein the plurality of images (50) are acquired at a predefined time interval.

14. The method of any one of claims 1 to 13, wherein the plurality of images (50) are acquired by an image sensor (40) having a plurality of pixels.

15. A safety device (12) for a machine (10), wherein a first machine part (20) carries out a working movement (28) towards a second machine part (24) in order to machine a workpiece (30), wherein the first machine part (20) has a leading edge (32) in the movement direction, which leading edge defines a movement plane (34), comprising:
- an image sensor (40) having a plurality of pixels for recording a plurality of spatially resolved images (50) of the edge (32), at least a part of the workpiece (30), and a protective region (44) between the edge (32) and the second machine part (24),
- an image processing unit (46) coupled to the image sensor (40), and
- a control unit (48) coupled to the image processing unit (46) and configured to compare an acquired velocity (V) of the working movement (28) of the first machine part (20) in relation to the workpiece (30) to a reference velocity (R) of the working movement (28) and to stop the working movement (28) if the acquired velocity (V) deviates from the reference velocity (R),
**characterized in that** the image processing unit (46) is configured to acquire the velocity (V) of the working movement (28) of the first machine part (20) in relation to the workpiece (30) on the basis of the acquired plurality of images (50), wherein the image processing unit (46) determines the velocity (V) of the working movement (28) as a function of a position of the edge (32) of the first machine part (20) as a velocity profile on the basis of the acquired images (50), and wherein the control unit (48) compares the velocity profile to a reference velocity profile.

## Revendications

1. Procédé (60) de surveillance d'une machine (10), une première partie de machine (20) accomplissant un mouvement de travail (28) par rapport à une deuxième partie de machine (24) afin d'usiner une pièce ouvrée (30), et la première partie de machine (20) possédant un bord avant (32) dans la direction du mouvement qui définit un plan de mouvement (34), comprenant les étapes suivantes :
- capture (68) d'une pluralité d'images (50) ayant une pluralité de pixels (52), les images comprenant respectivement des représentations à résolution spatiale du bord (32), d'au moins une partie de la pièce ouvrée (30) et d'une zone de protection (44) entre le bord et la deuxième partie de machine (24),
- acquisition (70) d'une vitesse (V) du mouvement de travail (28) de la première partie de machine (20) par rapport à la pièce ouvrée (30),
- comparaison (72) de la vitesse (V) acquise avec une vitesse de référence (R) du mouvement de travail, et
- arrêt (74) du mouvement de travail (28) pour autant que la vitesse (V) acquise s'écarte de la vitesse de référence (R),
**caractérisé en ce que** la vitesse (V) du mouvement de travail (28) de la première partie de machine (20) par rapport à la pièce ouvrée (30) est acquise en se basant sur la pluralité d'images (50) capturées, la vitesse (V) du mouvement de travail (28) étant déterminée en fonction d'une position du bord (32) de la première partie de machine (20) en tant que profil de vitesse en se basant sur les images (50) capturées et le profil de vitesse étant comparé à un profil de vitesse de référence.

2. Procédé selon la revendication 1, la vitesse (V) étant acquise pendant le mouvement de travail (28) entre une position prédéfinie (d₁) du bord (32) de la première partie de machine (20) et un point final (d₄) du mouvement de travail (28).

3. Procédé selon la revendication 2, la position prédéfinie (d₁) du bord (32) de la première partie de machine (20) étant déterminée par une barrière de mesure optique.

4. Procédé selon la revendication 2 ou 3, la vitesse du mouvement de travail entre la position prédéfinie (d₁) du bord (32) de la première partie de machine (20) et le point final (d₄) du mouvement de travail (28) étant continuellement réduite.

5. Procédé selon la revendication 3 ou 4, la zone de protection (44) étant réduite pendant le mouvement de travail (28) entre la position prédéfinie (d₁) et le point final (d₄) du mouvement de travail en fonction d'un écart entre le bord (32) et la pièce ouvrée (30).

6. Procédé selon l'une des revendications 1 à 5, la vitesse de référence (R) étant configurée préalablement dans une étape de configuration.

7. Procédé selon l'une des revendications 1 à 6, la position du bord (32) de la première partie de machine étant acquise en tant qu'écart par rapport à la pièce ouvrée (30).

8. Procédé selon l'une des revendications 1 à 7, le mouvement de travail (28) de la première partie de machine (20) étant arrêté pour autant que la vitesse (V) acquise est supérieure à la vitesse de référence (R).

9. Procédé selon l'une des revendications 1 à 8, la zone de protection (44) en tant que zone surveillée entre le bord (32) et la deuxième partie de machine étant espacée du bord (32) de la première partie de machine (20) et l'écart étant réglable de manière variable.

10. Procédé selon l'une des revendications 1 à 9, différentes positions de la première partie de machine (20) et/ou de la pièce ouvrée (30) étant déterminées en se basant sur une reconnaissance de modèle dans la pluralité d'images (50), et la vitesse (V) du mouvement de travail (28) étant acquise en se basant sur une différence temporelle et spatiale entre les positions acquises.

11. Procédé selon la revendication 10, les positions de la première partie de machine (20) et/ou de la pièce ouvrée (30) étant acquises en se basant sur une interpolation entre les modèles reconnus de la pluralité d'images.

12. Procédé selon l'une des revendications 1 à 11, différentes positions de la première partie de machine (20) et/ou de la pièce ouvrée (30) étant acquises dans la pluralité d'images (50) en se basant sur des signaux de pixel individuels, et la vitesse (V) du mouvement de travail (28) étant déterminée en se basant sur une différence temporelle entre les signaux de pixel et en se basant sur un écart entre les pixels (52) correspondants.

13. Procédé selon l'une des revendications 1 à 12, la pluralité d'images (50) étant capturées avec un écart temporel prédéfini.

14. Procédé selon l'une des revendications 1 à 13, la pluralité d'images (50) étant capturées par un capteur d'images (40) avec une pluralité de pixels.

15. Dispositif de sécurité (12) pour une machine (10), une première partie de machine (20) accomplissant un mouvement de travail (28) par rapport à une deuxième partie de machine (24) afin d'usiner une pièce ouvrée (30), la première partie de machine (20) possédant un bord avant (32) dans la direction du mouvement qui définit un plan de mouvement (34), comprenant :
- un capteur d'images (40), qui possède une pluralité de pixels afin d'enregistrer une pluralité d'images (50) à résolution spatiale du bord (32), d'au moins une partie de la pièce ouvrée (30) et d'une zone de protection (44) entre le bord (32) et la deuxième partie de machine (24),
- une unité de traitement d'images (46), qui est connectée au capteur d'images (40), et
- une unité de commande (48), qui est connectée à l'unité de traitement d'images (46) et qui est conçue pour comparer une vitesse (V) acquise du mouvement de travail (28) de la première partie de machine (20) par rapport à la pièce ouvrée (30) avec une vitesse de référence (R) du mouvement de travail (28) et arrêter le mouvement de travail (28) pour autant que la vitesse (V) acquise s'écarte de la vitesse de référence (R),
**caractérisé en ce que** l'unité de traitement d'images (46) est conçue pour acquérir la vitesse (V) du mouvement de travail (28) de la première partie de machine (20) par rapport à la pièce ouvrée (30) en se basant sur la pluralité d'images (50) capturées, l'unité de traitement d'images (46) déterminant la vitesse (V) du mouvement de travail (28) en fonction d'une position du bord (32) de la première partie de machine (20) en tant que profil de vitesse en se basant sur les images (50) capturées, et l'unité de commande (48) comparant le profil de vitesse à un profil de vitesse de référence.
